(19) Europäisches Patentamt
European Patent Office
Office européen des brevets

(11) Veröffentlichungsnummer : **0 355 592 B1**

(12) # EUROPÄISCHE PATENTSCHRIFT

(45) Veröffentlichungstag der Patentschrift : **25.11.92 Patentblatt 92/48**

(51) Int. Cl.[5] : **B01D 53/34**

(21) Anmeldenummer : **89114775.3**

(22) Anmeldetag : **10.08.89**

(54) **Verfahren zur Entfernung von Silanverbindungen aus silanhaltigen Abgasen.**

(30) Priorität : **23.08.88 DE 3828549**

(43) Veröffentlichungstag der Anmeldung : **28.02.90 Patentblatt 90/09**

(45) Bekanntmachung des Hinweises auf die Patenterteilung : **25.11.92 Patentblatt 92/48**

(84) Benannte Vertragsstaaten : **DE ES FR GB IT**

(56) Entgegenhaltungen :
**FR-A- 2 156 655**
**W. NOLL: "Chemie und Technologie der Silikone", Auflage 2, 1968, Seiten 80-81, Verlag Chemie, Weinheim, DE**

(56) Entgegenhaltungen :
**CHEMICAL ABSTRACTS, Band 63, 1965, Zusammenfassung Nr. 3667g, Columbus, Ohio, US; L.E. ELISEEVA et al.: "Kinetics of thedisproportionation reaction of triethoxysilane"**

(73) Patentinhaber : **HÜLS AKTIENGESELLSCHAFT**
**Paul-Baumann-Strasse 1 Postfach 1320**
**W-4370 Marl 1 (DE)**

(72) Erfinder : **Schork, Reinhold, Dr.**
**Fritz-Rössler-Strasse 6**
**W-7888 Rheinfelden (DE)**
Erfinder : **Vahlensieck, Hans-Joachim, Dr.**
**Im Habiken 2**
**W-7867 Wehr (DE)**
Erfinder : **Die andere Erfinder haben auf ihre Nennung verzichtet**

EP 0 355 592 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Gegenstand der vorliegenden Erfindung ist ein Verfahren zur Entfernung von Silanverbindungen aus silanhaltigen Abgasen.

Silanhaltige Abgase, die einer Reinigung unterzogen werden müssen, fallen heute in vielen Industriezweigen an, wie z. B. bei der Produktion von Siliciumverbindungen, bei der Abfüllung von Siliciumverbindungen, bei Herstellung und Abfüllung von silanhaltigen Gasgemischen und bei der Halbleiterfertigung.

Konventionelle Entsorgungsmethoden, wie Verbrennung oder Auswaschen in Waschtürmen, bereiten hier, was technische Durchführung und Umweltbelastung betreffen, große Probleme. Bei den Verbrennungen entsteht sehr feine Kieselsäure, deren Abtrennung von den Verbrennungsgasen schwierig ist. Sind Chlorsilane im Abgas enthalten, tritt in den Verbrennungsgasen HCl und $Cl_2$ auf, d. h. der Verbrennung muß eine zusätzliche Abgasbehandlung nachgeschaltet werden. Werden wäßrige Waschturmsysteme benutzt, so treten dort Probleme durch Verkieselungen und bei Chlorsilanen durch saure Abwässer auf. Monosilan wird von Wasser nur sehr langsam hydrolysiert, so daß hier zusätzlich eine alkalische Wäsche nachgeschaltet werden muß.

Es bestand daher die Aufgabe, ein Verfahren zur Entfernung von Silanverbindungen aus silanhaltigen Abgasen zu finden, welches die genannten Nachteile nicht aufweist. Diese Aufgabe wurde erfindungsgemäß dadurch gelöst, daß man die Silanverbindungen mit einem Metallalkoholat in alkoholischer Lösung zu Tetraalkoxysilan umsetzt.

Bei dem erfindungsgemäßen Verfahren werden die Silanverbindungen vollständig in Tetraalkoxysilan überführt. Das Tetraalkoxysilan kann bei Alkoxysilanherstellern aufgearbeitet und vermarktet werden.

In der Praxis führt man vorteilhafterweise die alkoholische Metallalkoholatlösung über eine Füllkörperkolonne im Kreislauf.

Das erfindungsgemäß Verfahren kann im Gleichstrom oder im Gegenstrom betrieben werden. Bevorzugt führt man die silanhaltigen Abgase im Gegenstrom zur Metallalkoholatlösung.

Vorzugsweise setzt man beim erfindungsgemäßen Verfahren Natriummethylat in Methanol oder Natriumethylat in Ethanol ein. Die Konzentration des Metallalkoholats im Alkohol beträgt bevorzugt 5 bis 30 Gew.-%.

Mit Hilfe des erfindungsgemäßen Verfahrens können folgende Verbindungen entfernt werden:

$SiH_nX_{4-n}$; n = 0-4, X = F, Cl, Br;

$SiH_n(OR)_{4-n}$; n = 1-3, R = $CH_3$, $C_2H_5$,$C_3H_7$;

$Si_2H_6$ und höhere Silane, z.B. Trisilan.

Bevorzugt wird das Verfahren bei mono- und disilanhaltigen Abgasen eingesetzt. Bei der Entfernung von Silanen verläuft die Reaktion z. B. nach der Gleichung:

$$SiH_4 + 4\ CH_3OH \xrightarrow{CH_3ONa} Si(OCH_3)_4 + 4\ H_2.$$

Der Einsatz von Natriummethylat in Methanol ist besonders kostengünstig.

Enthält das Abgas nur Si-H-Verbindungen, so erhält man als Reaktionsprodukte nur Tetraalkoxysilan und Wasserstoff; verbraucht wird nur Alkohol, das Alkoholat wirkt nur katalytisch. Somit müssen der im Kreis gefahrenen Lösung nur der verbrauchte Alkohol und das mit dem Tetraalkoxysilan ausgeschleuste Alkoholat zudosiert werden.

Die Reaktion der Alkoxysilane der obenerwähnten allgemeinen Formel mit dem Alkohol verläuft - unter katalytischer Wirkung durch das Metallalkoholat - analog zur Reaktion der Silane entsprechend der vorstehenden Gleichung unter Bildung von Tetraalkoxysilan und Wasserstoff.

Als halogenhaltige Silane fallen in silanhaltigen Abgasen meist Tetrachlorsilan, Trichlorsilan, Dichlorsilan und Monochlorsilan an. Die Reaktion zur Entfernung der Silane verläuft z. B. nach der Gleichung:

$$SiH_2Cl_2 + 2\ NaOCH_3 + 2\ CH_3OH$$
$$\rightarrow Si(OCH_3)_4 + 2\ H_2 + 2\ NaCl.$$

Halogenhaltige Silane liefern als weiteres Reaktionsprodukt Metallhalogenid. Neben dem Alkohol wird hierbei - dem Chlorgehalt des Silans entsprechend - Alkoholat verbraucht.

Zur weiteren Erläuterung der Erfindung dienen die schematische Darstellung gemäß beigefügter Zeichnung einer Vorrichtung zur Durchführung des Verfahrens sowie die Beispiele.

Die alkoholische Metallalkoholatlösung wird über den Zulauf 7 und die Pumpe 6 auf die Füllkörperkolonne 1 gegeben. Das silanhaltige Abgas wird z. B. über die Zuleitung 4 eingeleitet. Bei dieser Ausführung befindet

sich also das silanhaltige Abgas im Gegenstrom zur Alkoholatlösung. Über die Abgaskühlung 3 und die Abgasleitung 5 verläßt das gereinigte Abgas die Kolonne. Die Abgaskühlung wird von einem Kühlmittel durchströmt, welches z. B. eine Temperatur von - 40 °C hat. Durch die Zuleitung 10 wird das System mit einem Inertgas, z. B. Stickstoff, überlagert. In der Abgaskühlung 3 werden auch vom Inertgas mitgerissenes Lösungsmittel und/oder Alkoxysilan kondensiert. Die alkoholische Metallalkoholatlösung wird im Behälter 2 gesammelt, der auch als Absetzbehälter für NaCl bei der Behandlung chlorsilanhaltiger Abgase und als Auffangbehälter für das Kondensat aus der Abgaskühlung 3 dient. Die alkoholische Metallalkoholatlösung wird über den Ablauf 9, die Pumpe 6 und die Leitung 11 im Kreis gefahren. Je nach im Abgas vorhandenen Silanverbindungen wird der verbrauchte Alkohol oder die verbrauchte Alkoholatlösung nachdosiert. Die verbrauchte Alkoholatlösung, das gebildete Natriumchlorid und sonstige flüssige bzw. feste Bestandteile, die durch Reaktion oder Kondensation entstehen, werden über den Ablauf 8 ausgeschleust.

Die Reaktionen gemäß den nachfolgenden Beispielen 1 bis 3 wurden bei einem Druck von ca. 1 bar und Raumtemperatur durchgeführt. Es ist jedoch auch möglich, das erfindungsgemäße Verfahren bei anderen Drücken und Temperaturen durchzuführen.

Beispiel 1

Die gesamte Anlage wird zuerst mit Stickstoff gespült. Über den Zulauf 7 wird 20 bis 30 Gew.-%ige methanolische Natriummethylatlösung eingefüllt. Nach Inbetriebnahme der Pumpe 6 und der Abgaskühlung 3 wird über die Zuleitung 4 chlorsilanhaltiges Abgas eingeleitet. Der Methylatlösung wird Phenolphthalein als Indikator zugesetzt. Beginnende Entfärbung in der Füllkörperkolonne 1 zeigt die Erschöpfung der Lösung an. Die verbrauchte Lösung wird dann zusammen mit dem ausgefallenen Natriumchlorid über den Ablauf 8 teilweise abgelassen. Die Versorgung der Pumpe 6 wird über den Ablauf 9 gewährleistet. Über den Zulauf 7 wird die entsprechende Menge Frischlösung zugegeben. Für diese Maßnahme ist ein Abstellen der Anlage nicht erforderlich.

Die Anlage wird ständig mit Stickstoff überlagert.

Beispiel 2

Die gesamte Anlage wird zuerst mit Stickstoff gespült. Über den Zulauf 7 wird handelsübliche 5 bis 30 Gew.-%ige methanolische Natriummethylatlösung eingefüllt. Nach Inbetriebnahme der Pumpe 6 und der Abgaskühlung 3 wird über die Zuleitung 4 monosilanhaltiges Abgas eingeleitet. Ist die Alkoholatlösung verbraucht, wird - wie in Beispiel 1 - ein Teil der alten Lösung abgelassen und frische Lösung zugegeben. Auch hier muß die Anlage nicht abgestellt werden.

Die Anlage wird ständig mit Stickstoff überlagert.

Beispiel 3

Die gesamte Anlage wird zuerst mit Stickstoff gespült. Über den Zulauf 7 wird handelsübliche 5 bis 30 Gew.-%ige ethanolische Natriumethylatlösung eingefüllt. Nach Inbetriebnahme der Pumpe 6 und der Abgaskühlung 3 wird über die Zuleitung 4 monosilanhaltiges Abgas eingeleitet. Ist die Alkoholatlösung verbraucht, wird - wie in Beispiel 1 - ein Teil der alten Lösung abgelassen und frische Lösung zugegeben. Auch hier muß die Anlage nicht abgestellt werden.

Die Anlage wird ständig mit Stickstoff überlagert.

Beispiel 4 (Vergleichsbeispiel)

In einem 1-l-Dreihalskolben mit Gaseinleitungsrohr, Rührer und Rückflußkühler werden 600 ml einer gesättigten Lösung von KOH in Methanol vorgelegt. Unter Rühren wird ein trichlorsilanhaltiger Stockstoffstrom durch die Lösung geleitet. Es bildet sich sofort unter Schaumbildung ein weißer Feststoff. Das Chlorsilan reagiert ab, jedoch ist die schmierige Konsistenz der entstehenden Suspension nicht geeignet, die in den Beispielen 1 bis 3 beschriebene kontinuierliche Anlage sicher und reproduzierbar zu betreiben. Weiterhin bereitet es Schwierigkeiten, das Produkt in eine deponierfähige Form zu bringen.

Die gemäß den Beispielen 1 bis 3 behandelten Abgase enthielten bei einer gaschromatographischen Analyse (Bestimmungsgrenze 0,1 Vol.-%) nach der erfindungsgemäßen Behandlung keine Silane, die eingangs als zu entfernende Verbindungen genannt wurden.

## Patentansprüche

1. Verfahren zur Entfernung von Silanverbindungen aus silanhaltigen Abgasen, **dadurch gekennzeichnet,** daß man die Silanverbindungen mit einem Metallalkoholat in alkoholischer Lösung zu Tetraalkoxysilan umsetzt.

2. Verfahren nach Anspruch 1, dadurch gekennzeichnet, daß man die alkoholische Metallalkoholatlösung über eine Füllkörperkolonne im Kreislauf führt.

3. Verfahren nach Anspurch 1 oder 2, dadurch gekennzeichnet, daß man die silanhaltigen Abgase im Gegenstrom zur Metallalkoholatlösung führt.

4. Verfahren nach einem der Ansprüche 1 bis 3, dadurch gekennzeichnet, daß man Natriummethylat in Methanol oder Natriumethylat in Ethanol einsetzt.

5. Verfahren nach einem der Ansprüche 1 bis 4, dadurch gekennzeichnet, daß die Konzentration des Metallalkoholats im Alkohol 5 bis 30 Gew.-% beträgt.

## Claims

1. Process for the removal of silane compounds from silane-containing waste gases, characterised in that the silane compounds are reacted with a metal alcoholate in alcoholic solution to form tetraalkoxysilane.

2. Process according to Claim 1, characterised in that the alcoholic metal alcoholate solution is circulated via a filler body column.

3. Process according to Claim 1 or 2, characterised in that the silane-containing waste gas is led in countercurrent to the metal alcoholate solution.

4. Process according to one of Claims 1 to 3, characterised in that sodium methylate in methanol or sodium ethylate in ethanol is employed.

5. Process according to one of Claims 1 to 4, characterised in that the concentration of the metal alcoholate in the alcohol amounts to 5 to 30 % by weight.

## Revendications

1. Procédé pour éliminer des composés silaniques de gaz résiduaires contenant des silanes, caractérisé en ce qu'on fait réagir les composés silaniques avec un alcoolate de métal en solution alcoolique pour obtenir du tétra-alcoxy-silane.

2. Procédé selon la revendication 1, caractérisé en ce qu'on fait passer la solution alcoolique d'alcoolate de métal en circuit fermé comportant une colonne à garnissage.

3. Procédé selon la revendication 1 ou 2, caractérisé en ce qu'on fait circuler les gaz résiduaires contenant des silanes à contre-courant de la solution d'alcoolate de métal.

4. Procédé selon l'une des revendications 1 à 3, caractérisé en ce qu'on utilise du méthylate de sodium dans du méthanol ou de l'éthylate de sodium dans de l'éthanol.

5. Procédé selon l'une des revendications 1 à 4, caractérisé en ce que la concentration de l'alcoolate de métal dans l'alcool est de 5 à 30 % en poids.

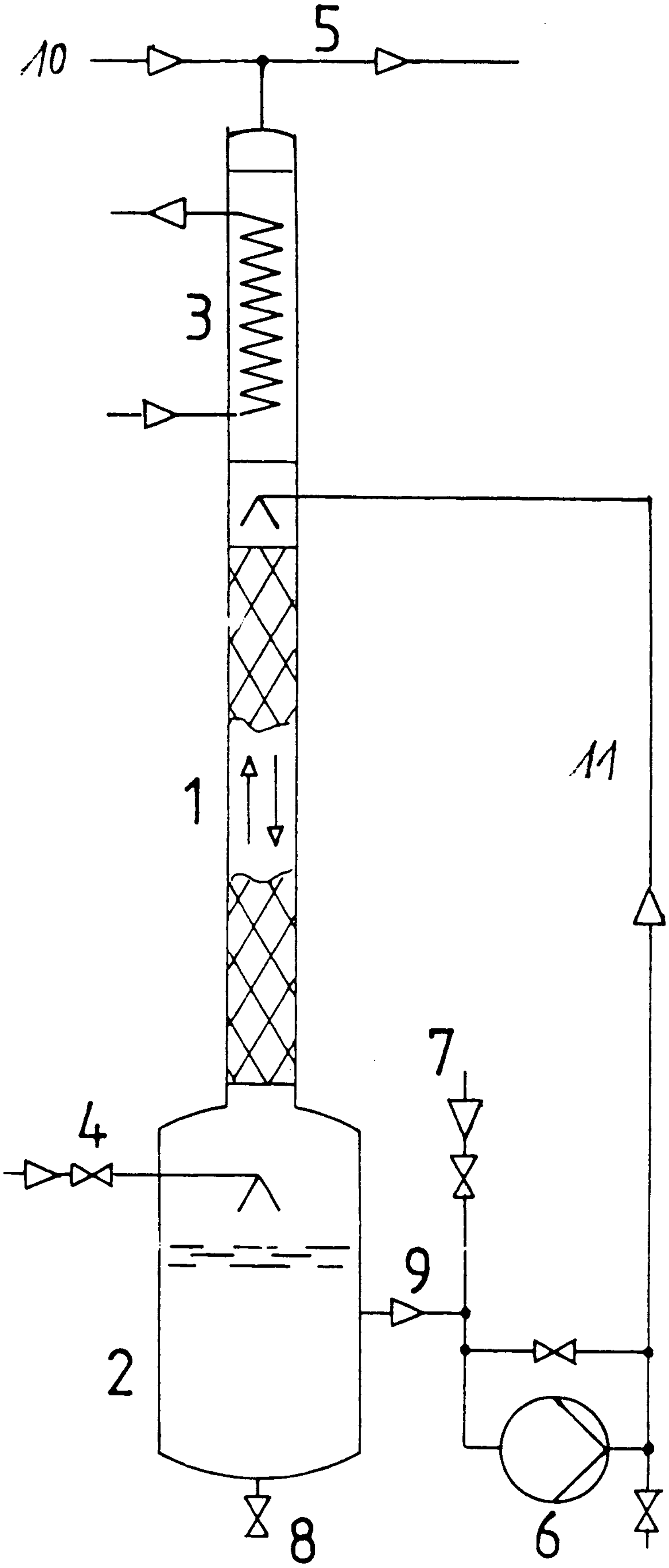
10
5
3
1
11
7
4
9
2
8
6